# EUROPEAN PATENT APPLICATION

(11) **EP 1 222 849 A1**
(43) Date of publication of application: **17.07.2002**
(21) Application number: 01204924.3
(22) Date of filing: 17.12.2001
(51) Int. Cl.: A01D 43/10

(54) **Mowing and crushing device**

(30) Priority: 10.01.2001 NL 1017069
(71) Applicant: Lely Enterprises AG, 6300 ZUG (CH)
(72) Inventor: Koorn, Maarten, 3123 CP Schiedam (NL); Van den Engel, Alfonsus Jacobus, 3123 CM Schiedam (NL)
(74) Representative: Corten, Maurice Jean F.M.

(57) **Abstract**

The invention relates to a device for mowing crop, comprising a frame (2) with a cutter bar (3) having motor-drivable mowing elements (4), as well as a motor-drivable, rotatable crushing member (8) having at least one crushing element which defines during rotating a virtual crushing surface. The crushing member (8) has such a shape that at least a part of the virtual crushing surface has a greater diameter than the remaining part of the virtual crushing surface.

## Description

The invention relates to a device according to the preamble of claim 1.

Such a device is known.

With the known device it frequently happens that two swaths are joined together to form one swath, so that less working runs are required, e.g. when the mowed crop is to be compressed or chopped. With the known device it may further also be important clearly to separate two adjacent working runs from each other. This is in particular of importance to prevent crop that has already been mowed and crushed from again being mowed and possibly crushed in a next working run.

It is an object of the invention to solve the above-mentioned drawbacks and/or problems in a simple manner.

According to the invention this is achieved by the characterizing part of claim 1. It has appeared in practice that the material crushed by that part of the crushing member that has a higher peripheral velocity than the remaining part of the crushing member is displaced in the direction of the remaining part having a lower peripheral velocity. This effect is in particular obtained to a great extent when the crushing surface defined by the crushing member is shaped substantially and preferably completely conically. According to again another inventive feature, the crushing surface defined by the crushing member consists of at least two conically shaped parts. According to a further inventive feature, the pointed ends of the conically shaped parts face each other. In this manner it is achieved that the swath is deposited behind the pointed portions in the middle thereof. According to again another embodiment of the invention, the pointed portion of one conically shaped part faces the blunt portion of the other conically shaped part. In this manner it is achieved that near the end of each of the pointed portions a swath is deposited. According to a further inventive feature, the two conical parts almost adjoin each other.

In order to bring about an optimal crushing of the mowed crop, according to the invention the crushing member is fitted to the frame in such a manner that a line constituted by a tangent with the conical part extends approximately parallel to the cutter bar. According to a further inventive feature, the crushing member is disposed across the entire working width of the cutter bar. According to again another aspect of the invention, the conical shape of the crushing member is chosen such that the crushed material, viewed in the direction of travel of the device, is discharged transversely towards an end of the crushing member. According to a further inventive feature, the crushing member comprises a central, motor-drivable axis with radially extending crushing elements disposed thereon. According to a further inventive feature, the crushing elements are subdivided into groups having a mutually different length. According to again another inventive feature, the crushing elements are arranged around the central axis.

For the purpose of guiding the crushed crop in a desired direction in a still more accurate and efficient manner, according to a further inventive feature the device is provided with crop guide means which are adapted to guide the flow of crop crushed by the crushing member in a certain direction, in this case to cause it to turn off in a certain direction. According to a further inventive feature, the crop guide means are disposed at least near that part of the crushing member having the highest peripheral velocity during operation. In this manner it can be achieved that the crushed crop can be displaced over a relatively great distance, because the material has much kinetic energy due to the high peripheral velocity. In this manner it is in particular possible to cause the crop that has been crushed by the part of the crushing member having a high peripheral velocity to land at least partially on the crop that has been crushed by the crushing member having a lower peripheral velocity. According to a further inventive feature, the crop guide means are disposed near an end of the crushing member. According to again another inventive feature, the crop guide means extend as far as approximately half of the working width of the crushing member. According to again another aspect of the invention, the upper portion of the crop guide means is located at approximately the same level as the highest level of the crushing member. According to again another inventive feature, the lower portion of the crop guide means is located at approximately the same level as the highest level of the mowing elements. In this manner the mowed and crushed crop is optimally guided by the crop guide means in a certain direction. According to again another inventive feature, a still better guiding is guaranteed when the crop guide means are of a chute-shaped design. According to again another inventive feature, in a plan view of the device the crop guide means extend in a curved manner. According to again another aspect of the invention, the device comprises at least two crop guide means. It will be obvious that with the aid of two or more crop guide means it is possible to guide various flows of crop in a certain direction.

The invention will now be explained in further detail with reference to the accompanying figures, in which:
Figure 1 is a plan view of the device for mowing crop comprising a motor-drivable, rotatable crushing member according to the invention;
Figure 2 is a rear view of the device according to Figure 1;
Figure 3 shows a further embodiment of the device according to the invention, said device being provided with two conically shaped rotatable crushing members.

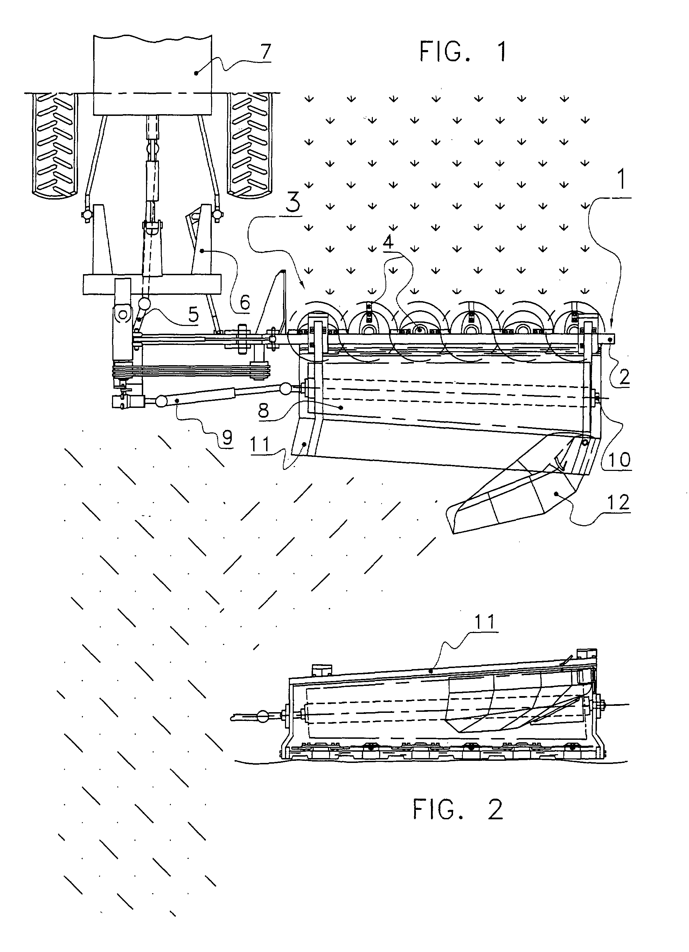

Figure 1 is a plan view of a device 1 for mowing crop, said device comprising a frame 2 with a cutter bar 3 having motor-drivable mowing elements 4. The mowing elements 4 are driven by means of a transmission 5. The frame 2 is further provided with a coupling trestle 6 by means of which the device 1 can be coupled to a tractor 7. The device 1 further comprises a rotatable crushing member 8 for crushing the crop mowed by the cutter bar 3. Via a further transmission 9 the rotatable crushing member 8 is motor-drivable about an axis 10 located in the frame 2. As shown in Figures 1 and 2, the rotatable crushing member 8 is conically shaped. The arrangement of the axis 10 in the frame 2 is chosen such that a line constituted by a tangent with the conical part extends approximately parallel to the cutter bar 3 (Figure 2). Depending on the dimensions of the conical crushing member 8, the axis 10 will be arranged in the frame 2 at an angle different from that in the embodiment shown. In the present embodiment the crushing member 8 comprises (non-shown) crushing elements which are radially disposed on the axis 10. As shown in Figures 1 and 2, there is provided a cap 11 above the crushing member 8. Near the blunt part of the crushing member 8 there are further provided crop guide means 12. In the present embodiment the crop guide means 12 are designed as a curved chute. However, it will be obvious that instead of a curved chute it is also possible to design the crop guide means 12 in an other than a chute-like shape. As shown in Figure 1, the crushed material is guided by the crop guide means 12 in the direction of the pointed portion of the crushing member 8. The extent to which and the distance across which the material is weighed off, respectively displaced depend inter alia on the peripheral velocity of the crushing member 8 and the shape and length of the crop guide means 12.

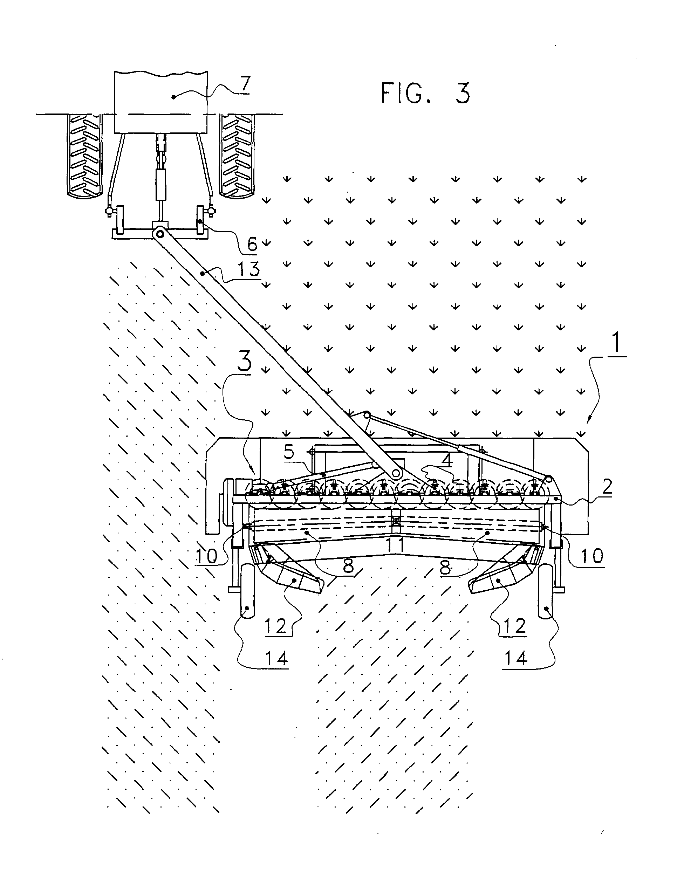

Figure 3 shows a second embodiment of the device 1 according to the invention, in which parts corresponding to those of the first embodiment are indicated by the same reference numerals. The second embodiment concerns a drawn mowing machine which is connected to the tractor 7 by means of a drawbar 13 and the coupling trestle 6. The frame 2 is further provided with two running wheels 14 supporting the device 1 during operation. Behind the cutter bar 3 there are further arranged two rotatable crushing members 8 whose pointed ends face each other. Furthermore, each of the crushing members 8 is provided near its blunt end with crop guide means 12. The crushing members 8 together with the crop guide means 12 ensure that the mowed and crushed material is deposited in a swath approximately behind the device 1 in the middle thereof.

## Claims

1. A device for mowing crop, comprising a frame (2) with a cutter bar (3) having motor-drivable mowing elements (4), as well as a motor-drivable, rotatable crushing member (8) having at least one crushing element which defines during rotating a virtual crushing surface, **characterized in that** the crushing member (8) has such a shape that at least a part of the virtual crushing surface has a greater diameter than the remaining part of the virtual crushing surface.

2. A device as claimed in claim 1, **characterized in that** said crushing surface defined by the crushing member (8) is shaped substantially and preferably completely conically.

3. A device as claimed in claim 1, **characterized in that** said crushing surface defined by the crushing member (8) consists of at least two conically shaped parts.

4. A device as claimed in claim 3, **characterized in that** the pointed ends of the conically shaped parts face each other.

5. A device as claimed in claim 3, **characterized in that** the pointed portion of one conically shaped part faces the blunt portion of the other conical part.

6. A device as claimed in claim 4 or 5, **characterized in that** the two conical parts almost adjoin each other.

7. A device as claimed in any one of the preceding claims, **characterized in that** the crushing member (8) is fitted to the frame (2) in such a manner that a line constituted by a tangent with the conical part extends approximately parallel to the cutter bar (3).

8. A device as claimed in any one of the preceding claims, **characterized in that** the crushing member (8) is disposed across the entire working width of the cutter bar (3).

9. A device as claimed in any one of the preceding claims, **characterized in that** the conical shape of the crushing member (8) is chosen such that the crushed material, viewed in the direction of travel of the device (1), is discharged transversely towards an end of the crushing member (8).

10. A device as claimed in any one of the preceding claims, **characterized in that** the crushing member (8) comprises a central, motor-drivable axis (10) with the radially extending crushing element/elements disposed thereon.

11. A device as claimed in claim 10, **characterized in that** the crushing elements are subdivided into groups having a mutually different length.

12. A device as claimed in claim 10 or 11, **characterized in that** the crushing elements are arranged around the central axis (10).

13. A device as claimed in any one of the preceding claims, **characterized in that** the device is provided with crop guide means (12) which are adapted to guide the flow of crop crushed by the crushing member (8) in a certain direction.

14. A device as claimed in claim 13, **characterized in that** the crop guide means (12) are disposed at least near that part of the crushing member (8) having the highest peripheral velocity during operation.

15. A device as claimed in claim 13 or 14, **characterized in that** the crop guide means (12) are disposed near an end of the crushing member (8).

16. A device as claimed in any one of claims 13 to 15, **characterized in that** the crop guide means (12) extend as far as approximately half of the working width of the crushing member (8).

17. A device as claimed in any one of claims 13 to 16, **characterized in that** the upper portion of the crop guide means (12) is located at approximately the same level as the highest level of the crushing member (8).

18. A device as claimed in any one of claims 13 to 17, **characterized in that** the lower portion of the crop guide means (12) is located at approximately the same level as the highest level of the mowing elements (4).

19. A device as claimed in any one of claims 13 to 18, **characterized in that** the crop guide means (12) are of a chute-shaped design.

20. A device as claimed in any one of claims 13 to 19, **characterized in that** in a plan view of the device (1) the crop guide means (12) extend in a curved manner.

21. A device as claimed in any one of claims 13 to 20, **characterized in that** the device (1) comprises at least two crop guide means (12).
